# EUROPÄISCHE PATENTSCHRIFT

(11) **EP 2 616 674 B1**
(45) Veröffentlichungstag und Bekanntmachung des Hinweises auf die Patenterteilung: **25.02.2015**
(21) Anmeldenummer: 11767186.7
(22) Anmeldetag: 31.08.2011
(51) Int. Cl.: F03D 7/04

(54) **WINDENERGIEANLAGE SOWIE VERFAHREN ZUM GEREGELTEN HERUNTERFAHREN EINER WINDENERGIEANLAGE**
WIND POWER PLANT AND METHOD FOR THE CONTROLLED SHUTDOWN OF A WIND POWER PLANT
ÉOLIENNE ET PROCÉDÉ POUR L'ARRÊT PROGRESSIF DE MANIÈRE RÉGULÉE D'UNE ÉOLIENNE

(30) Priorität: 16.09.2010 DE 102010045699
(43) Veröffentlichungstag der Anmeldung: 24.07.2013
(60) Teilanmeldung: 15151695.2
(73) Patentinhaber: Senvion SE, 22297 Hamburg (DE)
(72) Erfinder: PRINZ, Matthias, 24242 Felde (DE)
(74) Vertreter: Glawe, Delfs, Moll
(86) Internationale Anmeldenummer: PCT/EP2011/065001
(87) Internationale Veröffentlichungsnummer: WO 2012/034863

(56) Entgegenhaltungen:
- EP-A1- 2 211 055
- EP-A2- 1 860 321
- EP-A2- 2 080 902
- WO-A1-2009/058357
- JP-A- 60 045 787
- US-A1- 2010 135 801

## Beschreibung

Die Erfindung betrifft eine Windenergieanlage mit einer Hauptsteuerung. Der Hauptsteuerung wird ein Satz von Zustandsgrößen zugeführt. Die Hauptsteuerung ermittelt aus den Zustandsgrößen Stellvorgaben für den Betrieb der Windenergieanlage. Die Erfindung betrifft außerdem ein Verfahren zum Betreiben einer solchen Windenergieanlage.

Wenn in der Hauptsteuerung ein Fehler auftritt, besteht die Gefahr, dass falsche Stellvorgaben an die Komponenten der Windenergieanlage gegeben werden und dass die Windenergieanlage dadurch in einen unerwünschten Zustand gerät. Im Fehlerfall kann die Windenergieanlage deswegen nicht länger unter der Kontrolle der Hauptsteuerung betrieben werden kann.

Üblich ist es bislang, dass bei einem Fehler in der Hauptsteuerung die Sicherheitskette geöffnet wird. Mit dem Öffnen der Sicherheitskette wird der Hauptsteuerung die Kontrolle über die Windenergieanlage entzogen und die Windenergieanlage wird in einem ungeregelten Vorgang hart abgebremst. Mit einer solchen harten Bremsung wird die Windenergieanlage erheblich belastet. Es treten z.B. Schwingungen und abrupte Lastwechsel auf, die eine erheblich verkürzte Lebensdauer von Komponenten der Windenergieanlage zur Folge haben können.

Der Erfindung liegt die Aufgabe zu Grunde, eine Windenergieanlage sowie ein Verfahren zum Betreiben einer solchen Windenergieanlage vorzustellen, mit denen die Windenergieanlage bei einem Fehler in der Hauptsteuerung weniger belastet wird. Ausgehend vom eingangs genannten Stand der Technik wird die Aufgabe gelöst durch die Merkmale der unabhängigen Ansprüche. Vorteilhafte Ausführungsformen finden sich in den Unteransprüchen.

Die erfindungsgemäße Windenergieanlage umfasst eine Minimalsteuerung und ein Überwachungsmodul. Die Minimalsteuerung ermittelt aus einem Zustandsgrößen-Teilsatz Stellvorgaben für den Pitchwinkel und/oder die Pitchgeschwindigkeit. Das Überwachungsmodul überwacht die Hauptsteuerung und übergibt bei einem Fehler in der Ausführung der Hauptsteuerung die Kontrolle über die Windenergieanlage an die Minimalsteuerung. Die Minimalsteuerung ist dazu ausgelegt, Informationen über den Zustand der Hauptsteuerung bei Fehlereintritt zu speichern.

Zunächst werden einige Begriffe erläutert. Die Zustandsgrößen enthalten Informationen über Bedingungen, die Einfluss auf den Betrieb der Windenergieanlage haben können. Dazu gehören beispielsweise Informationen über den Zustand von Komponenten der Windenergieanlage und Umgebungsbedinungen, wie etwa die Windgeschwindigkeit. Die Hauptsteuerung verarbeitet diese Informationen und ermittelt daraus Stellvorgaben für den Betrieb der Windenergieanlage. Die Stellvorgaben werden an die betreffenden Komponenten der Windenergieanlage übermittelt, die ihren Betrieb gemäß den Stellvorgaben einstellen. Die Summe aller Zustandsgrößen, die der Hauptsteuerung zugeführt werden, wird als Satz von Zustandsgrößen bezeichnet. Ein Zustandsgrößen-Teilsatz umfasst einen Teil - jedoch nicht alle - Zustandsgrößen, die zu dem Satz von Zustandsgrößen gehören.

Ein Vorfall in der Hauptsteuerung wird dann als Fehler bezeichnet, wenn er so schwerwiegend ist, dass die Windenergieanlage nicht weiter unter der Kontrolle der Hauptsteuerung betrieben werden kann. Bei klassischen Windenergieanlagen führt ein Fehler dazu, dass die Sicherheitskette geöffnet wird und die Windenergieanlage hart abgebremst wird. Im Unterschied zu diesen Fehlern kann es kleinere Irregularitäten in der Hauptsteuerung geben, bei denen ein normaler Weiterbetrieb möglich ist.

Die Minimalsteuerung dient dazu, die Windenergieanlage in einem geregelten Betrieb zum Stillstand zu bringen. Die Erfindung hat erkannt, dass für diese beschränkte Aufgabe nicht die volle Funktionalität der Hauptsteuerung erforderlich ist. Die Minimalsteuerung bezieht deswegen nur die Zustandsgrößen ein, die sie zum Herunterfahren der Windenergieanlage tatsächlich braucht. Es gibt andere Zustandsgrößen, die für das Herunterfahren der Windenergieanlage irrelevant sind. Solche Zustandsgrößen werden nur von der Hauptsteuerung, nicht aber von der Minimalsteuerung verwendet. Durch den geringeren Aufwand unterscheidet sich die Erfindung insbesondere von Windenergieanlagen, bei denen die volle Funktionalität der Steuerung mehrfach vorgehalten wird (EP 2 136 273).

Mit der Erfindung wird also mit geringem Zusatzaufwand neben der Hauptsteuerung eine Minimalsteuerung bereitgestellt, mit der die Windenergieanlage schonend heruntergefahren werden kann. Die Belastung der Windenergieanlage ist dann wesentlich geringer, als wenn die Windenergieanlage nach Öffnen der Sicherheitskette hart abgebremst wird, also so schnell wie möglich zum Stehen gebracht wird. Im Unterschied zu einer harten Bremsung werden in der Minimalsteuerung Informationen über den Zustand der Komponente, die mit den Stellvorgaben beeinflusst wird, berücksichtigt. Auch mit der Minimalsteuerung findet also noch ein geregelter Betrieb statt. Dokument EP 2 211 055 offenbart eine Windturbine mit einer Minimalsteuerung, die die Turbine in einen geregelten Betrieb herunterfährt jedoch ohne Speicherung von Informationen über der Zustand der Hauptseuerung bei Fehlereintritt.

Zu den Zustandsgrößen, die als Zustandsgrößen-Teilsatz in der Minimalsteuerung berücksichtigt werden, können beispielsweise gehören der Pitchwinkel (Anstellwinkel des Rotorblatts), die Pitchgeschwindigkeit (Winkelgeschwindigkeit, mit der sich der Anstellwinkel ändert) und/oder das elektrische Drehmoment, das dem Rotor mit Hilfe von Generator und Umrichter entgegengesetzt wird. Von diesen Zustandsgrößen hängt es unmittelbar ab, dass die Windenergieanlage geordnet abgebremst werden kann. Andere Zustandsgrößen gehören zwar zu dem vollständigen Satz von Zustandsgrößen, der in der Hauptsteuerung verarbeitet wird, nicht aber zum Zustandsgrößen-Teilsatz der Minimalsteuerung. Dies sind in erster Linie solche Zustandsgrößen, die nicht unmittelbar relevant sind, wenn es nur darum geht, die Windenergieanlage geordnet zum Stillstand zu bringen. Dazu können beispielsweise die Temperatur des Getriebeöls oder Vorgaben von außen betreffend Spannung, Blindanteil, Wirkanteil und andere Parameter der Engergieeinspeisung gehören. Außer Betracht bleiben in der Minimalsteuerung können beispielsweise auch Schwingungen in der Anlage, Temperaturen von Komponeten, Windrichtung, Status der Kommunikationseinrichtungen, Zustand der Notversorgung etc.

Um den Rotor der Windenergieanlage zum vollständigen Stillstand zu bringen, müssen die Rotorblätter in die Fahnenstellung gebracht werden, in der sie praktisch keine Energie mehr aus dem Wind aufnehmen. Mit der Minimalsteuerung kann ein Pitchwinkel vorgegeben werden, der der Fahnenstellung entspricht. Die Pitchgeschwindigkeit kann auf Null reduziert werden, wenn der betreffende Pitchwinkel erreicht ist.

Durch geeignete Vorgaben für den Pitchwinkel und die Pitchgeschwindigkeit kann die Windenergieanlage unabhängig davon zum Stillstand gebracht werden, welches elektrische Drehmoment der Generator und der Umrichter dem Rotor entgegenstellen. Eine präzisere Regelung ist aber möglich, wenn die Minimalsteuerung zusätzlich Stellvorgaben für das elektrische Drehmoment ermittelt. Die entsprechenden Stellvorgaben können an den Umrichter übermittelt werden. Von Vorteil kann es auch sein, wenn mit der Minimalsteuerung Stellvorgaben für die Rotorbremse ermittelt werden

Erfindungsgemäß kann vorgesehen sein, dass es für den Betrieb der Windenergieanlage relevante Größen gibt, für die die Hauptsteuerung Stellvorgaben macht und für die die Minimalsteuerung keine Stellvorgaben macht, da sie zum Herunterbremsen nicht gebraucht werden. Zu diesen Größen können beispielsweise die Parameter der erzeugten elektrischen Energie gehören. Die Minimalsteuerung kann also so ausgelegt sein, dass sie keine direkten Stellvorgaben macht für die Spannung, den Wirkanteil, den Blindanteil und/oder die Leistung. Diese Größen haben zwar eine hohe Relevanz für den normalen Betrieb der Windenergieanlage, wenn es nur um das Herunterfahren geht, spielen sie jedoch keine Rolle. Indirekt hat das Herunterfahren natürlich Einfluss auf die Parameter der erzeugten elektrischen Energie.

Die Hauptsteuerung ist häufig so eingerichtet, dass sie in mehreren Segmenten Zustandsgrößen verarbeitet und daraus Stellvorgaben ermittelt. Wenn alle Segmente der Hauptsteuerung fehlerfrei arbeiten, kann die Minimalsteuerung in einem Schlafzustand gehalten werden, in dem sie keinen Einfluss auf den Betrieb der Windenergieanlage nimmt. Auch im Schlafzustand kann die Minimalsteuerung mit dem Zustandsgrößen-Teilsatz versorgt werden. Im Fehlerfall kann die Kontrolle dann schnell (quasi sofort) an die Minimalsteuerung übergeben werden. Der Fehlerfall kann beispielsweise so definiert sein, dass in einem der Segmente der Hauptsteuerung ein derartiger Fehler auftritt, dass die Hauptsteuerung selbst nicht mehr funktionsfähig ist.

In einer vorteilhaften Ausführungsform hat die Minimalsteuerung keinen anderen Zweck als das Herunterfahren der Windenergieanlage. Die Minimalsteuerung kann deswegen darauf beschränkt sein, solche Stellvorgaben zu machen, die eine Verminderung der Rotordrehzahl zur Folge haben. Zumindest können solche Stellvorgaben ausgeschlossen sein, die zu einer Erhöhung der Rotordrehzahl führen.

Bevor die Windenergieanlage, nachdem sie unter Kontrolle der Minimalsteuerung heruntergefahren wurde, wieder in Betrieb gesetzt werden kann, sollte der Fehler in der Hauptsteuerung behoben sein. Um dies zu erleichtern, ist die Minimalsteuerung so ausgelegt, dass sie Informationen über den Zustand der Hauptsteuerung bei Fehlereintritt speichert. Die Informationen können beispielsweise das Segment der Hauptsteuerung, in dem der Fehler aufgetreten ist, die Art des Fehlers, die für das Segment relevanten Zustandsgrößen sowie die von dem Segment ermittelten Stellvorgaben umfassen. Auf der Basis dieser Informationen kann der Servicetechniker gezielt nach dem Fehler suchen. Wenn die betreffenden Informationen an einen von der Windenergieanlage entfernten Leitstand übermittelt werden, kann dem Servicetechniker gegebenenfalls sogar die Anreise zur Windenergieanlage erspart werden.

Windenergieanlagen sind meist so eingerichtet, dass sie sich aus dem Stillstand selbsttätig in Betrieb setzen, wenn geeignete Windverhältnisse vorliegen. Wenn die Windenergieanlage nach einem Fehler in der Hauptsteuerung mit der Minimalsteuerung heruntergefahren wurde, ist eine selbsttätige Wiederinbetriebnahme häufig unerwünscht. Die Minimalsteuerung kann deswegen so eingerichtet sein, dass sie die selbsttätige Wiederinbetriebnahme unterbindet.

Es gibt Fehler in der Hauptsteuerung, die sich durch Herunterfahren und einen Neustart von selbst beheben. Es ist deswegen nicht immer sinnvoll, die Windenergieanlage nach dem Herunterfahren durch die Minimalsteuerung für einen langen Zeitraum außer Betrieb zu lassen. In einer vorteilhaften Ausführungsform unterbindet die Minimalsteuerung den Neustart nur für einen vorgegebenen Zeitraum. Nach Ablauf des vorgegebenen Zeitraums kann die selbsttätige Wiederinbetriebnahme erfolgen, vorausgesetzt es gab keinen weiteren Befehl im Stillstand zu bleiben. Durch einen Steuerbefehl von extern kann die Windenergieanlage jederzeit wieder in Betrieb gesetzt werden.

Es kann vorkommen, dass der Fehler in der Windenergieanlage derart ist, dass nicht nur der ordnungsgemäße Betrieb der Hauptsteuerung, sondern auch der ordnungsgemäße Betrieb der Minimalsteuerung beeinträchtigt ist. Der Fehler in der Minimalsteuerung kann auch derart sein, dass die Minimalsteuerung nicht weiter ausgeführt wird oder dass ein Fehler in einer der zum Abbremsen erforderlichen Komponenten ein Fehler detektiert wird. Die Überwachungseinrichtung kann so eingerichtet sein, dass sie solche Fehler erkennt und die Sicherheitskette öffnet. Die Sicherheitskette kann auch direkt von der Minimalsteuerung geöffnet werden. Anlass für ein Öffnen der Sicherheitskette durch die Minimalsteuerung kann es beispielsweise sein, dass die Anlage nicht innerhalb einer vorgegebenen Zeit unterhalb einer bestimmten Drehzahl ist oder ein bestimmter Anstellwinkel der Rotorblätter nicht erreicht wird.

Die Hauptsteuerung und die Minimalsteuerung können in einer Steuerungseinheit zusammengefasst sein. Die Minimalsteuerung kann ein Segment in der Steuerungseinheit sein, dem im Fehlerfall gegenüber anderen Segmenten der Steuerungseinheit Priorität eingeräumt wird.

Die Erfindung betrifft außerdem ein Verfahren zum Betreiben einer solchen Windenergieanlage, die eine Hauptsteuerung umfasst. Der Hauptsteuerung wird eine Vielzahl von Zustandsgrößen zugeführt, und die Hauptsteuerung ermittelt aus den Zustandsgrößen Stellvorgaben für den Betrieb der Windenergieanlage. Bei dem Verfahren wird zunächst ein Fehler in der Ausführung der Hauptsteuerung festgestellt. Nach dem Fehler wird die Kontrolle über die Windenergieanlage an eine Minimalsteuerung übergeben, die aus einem Zustandsgrößen-Teilsatz eine Stellvorgabe für den Pitchwinkel und/oder die Pitchgeschwindigkeit ermittelt. Unter der Kontrolle und gemäß den Stellvorgaben der Minimalsteuerung wird die Windenergieanlage bis zum Stillstand abgebremst.

Bei dem Verfahren wird eine Information über den in der Hauptsteuerung aufgetretenen Fehler an die Minimalsteuerung übermittelt. Ferner kann die die Fehlerinformation an eine von der Windenergieanlage entfernte Leitstelle übermittelt wird. Das Verfahren kann mit weiteren Merkmalen kombiniert werden, die oben mit Bezug auf die erfindungsgemäße Windenergieanlage beschrieben sind.

Die Erfindung wird nachfolgend unter Bezugnahme auf die beigefügten Zeichnungen anhand vorteilhafter Ausführungsformen beispielhaft beschrieben. Es zeigen:
- Fig. 1:: eine erfindungsgemäße Windenergieanlage;
- Fig. 2:: eine schematische Darstellung von Komponenten der Windenergieanlage aus Fig. 1;
- Fig. 3:: einen Ausschnitt aus Fig. 2 bei einer anderen Ausführungsform der Erfindung; und
- Fig. 4:: eine Steuerungseinheit eine Windenergieanlage bei einer anderen Ausführungsform einer Erfindung.

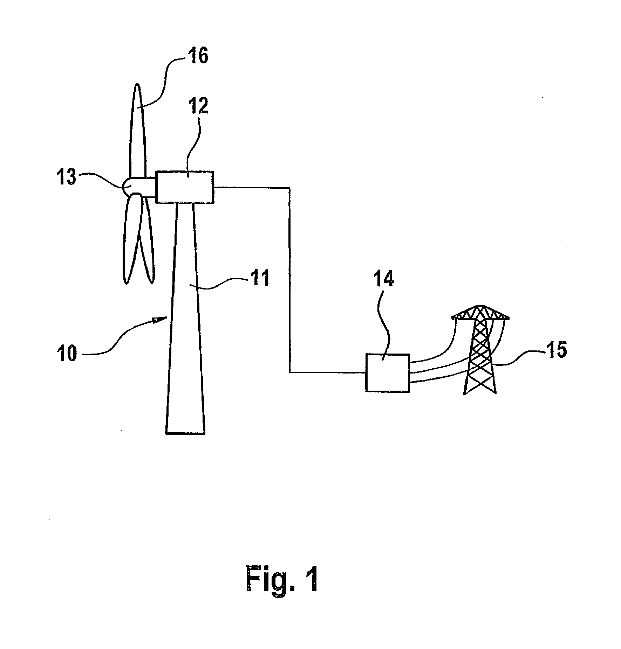

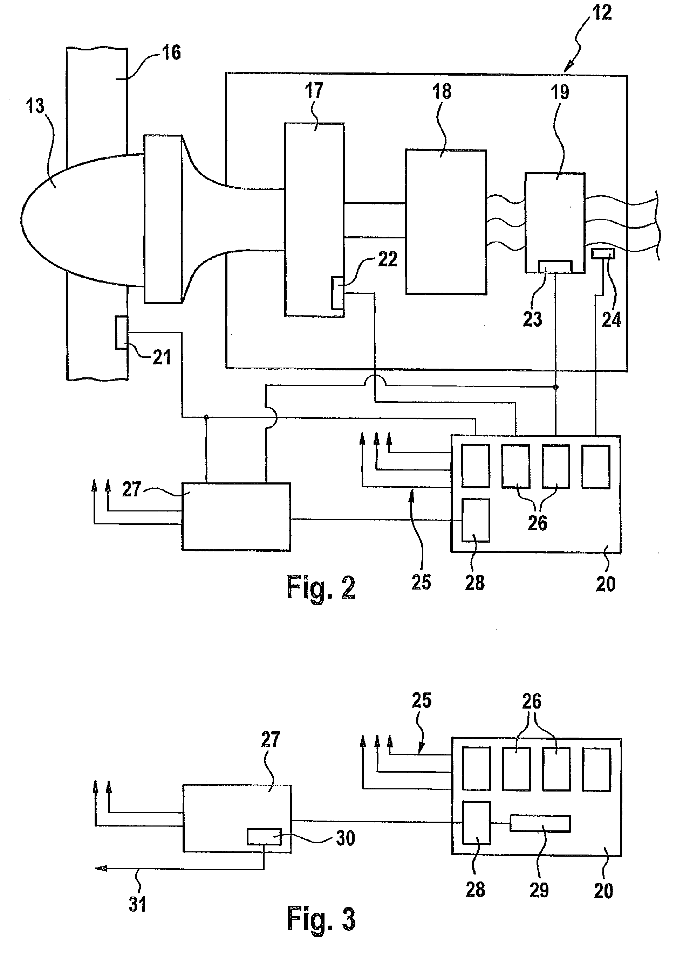

Eine Windenergieanlage 10 in Fig. 1 umfasst ein auf einem Turm 11 angeordnetes Maschinenhaus 12. In dem Maschinenhaus 12 ist ein drei Rotorblätter 16 aufweisender Rotor 13 gelagert, der über ein in Fig. 2 gezeigtes Getriebe 17 mit einem Generator 18 verbunden ist. Über einen Umrichter 19 wird die von dem Generator erzeugte elektrische Energie zu einer Übergabestelle 14 geleitet und dort an ein Stromverteilungsnetz 15 übergeben. Die Windenergieanlage 10 ist üblicherweise mit mehreren weiteren Windenergieanlagen zu einem Windpark zusammengeschlossen, wobei die elektrische Energie von den Windenergieanlagen bei der Übergabestelle 14 zusammengeführt wird.

Gemäß Fig. 2 umfasst die Windenergieanlage 10 eine Hauptsteuerung 20, der verschiedene Informationen über den Zustand der Windenergieanlage bzw. über Umgebungsbedingungen in Form von Zustandsgrößen zugeführt werden. So ist in den Rotorblättern 16 jeweils eine Pitchsteuerung 21 angeordnet, die den Pitchwinkel und die Pitchgeschwindigkeit des Rotorblatts 16 einstellt. Im Umrichter 19 ist eine Umrichtersteuerung 23 vorgesehen, die die elektrischen Größen misst und entsprechend einstellt. Die Information über den Ist-Zustand der Rotorblätter 16 und des Umrichters 19 werden als Zustandsgrößen an die Hauptsteuerung 20 übermittelt. Es gibt weitere Sensoren, etwa einen Drehzahlsensor für die Drehzahl des Rotors, einen Bremsensensor für den Zustand der Bremse oder einen elektrischen Sensor 24 für Parameter wie Spannung, Leistung, Wirkanteil, Blindanteil der erzeugten elektrischen Energie. Von solchen Sensoren werden ebenfalls Zustandsgrößen an die Hauptsteuerung 20 übermittelt. Die Fig. 2 veranschaulicht damit beispielhaft einige Zustandsgrößen, die in der Hauptsteuerung 20 berücksichtigt werden. Der vollständige Satz der in der Hauptsteuerung 20 berücksichtigten Zustandsgrößen umfasst noch weitere Informationen, die Fig. 2 nicht dargestellt sind.

Auf der Basis dieser Zustandsgrößen werden in der Hauptsteuerung 20 Stellvorgaben für die Komponenten der Windenergieanlage 10 ermittelt. Bei 25 ist der Ausgang der Hauptsteuerung 20 angedeutet, über den die Stellvorgaben an die Komponenten der Windenergieanlage 10 geleitet werden. Die Komponenten der Windenergieanlage 10 werden gemäß den Stellvorgaben eingestellt. Für die Ermittlung der Stellvorgaben umfasst die Hauptsteuerung 20 mehrere Segmente 26, in denen bestimmte Zustandsgrößen verarbeitet werden, um bestimmte Stellvorgaben zu ermitteln. Wenn die Hauptsteuerung 20 in Form eines Steuerungsprogramms ausgeführt ist, in dem eine Mehrzahl von Tasks parallel ausgeführt wird, können die Segmente 26 den Tasks des Steuerungsprogramms entsprechen.

Wenn in einem der Segmente 26 ein Fehler auftritt, ist ein sicherer Betrieb der Windenergieanlage 10 nicht mehr gewährleistet. Der Fehler kann beispielsweise darin bestehen, dass das Steuerungsprogramm nicht mehr weiter ausgeführt wird, also sozusagen "steht". Es besteht die Gefahr, dass Komponenten der Windenergieanlage keine oder falsche Stellvorgaben erhalten und dass dadurch unerwünschte Effekte wie beispielsweise Schwingungen hervorgerufen werden. Die Windenergieanlage 10 kann deswegen nicht weiter unter der Kontrolle der Hauptsteuerung 20 betrieben werden. In der Hauptsteuerung 20 ist ein Überwachungsmodul 28 enthalten, das laufend überwacht, ob ein solcher Fehler auftritt.

Die Windenergieanlage 10 umfasst für den Fehlerfall zusätzlich eine Minimalsteuerung 27. Der Minimalsteuerung 27 wird nicht der vollständige Satz Zustandsgrößen zugeführt, der in der Hauptsteuerung 20 verarbeitet wird, sondern nur ein Zustandsgrößen-Teilsatz. In dem Ausführungsbeispiel der Fig. 2 umfasst der Zustandsgrößen-Teilsatz die Informationen von dem Pitchsensor 21 im Rotorblatt 16 sowie die Informationen von dem Drehmomentsensor 23 im Umrichter 19. Nicht zum Zustandsgrößen-Teilsatz gehören beispielsweise die Informationen über die Temperatur des Getriebeöls oder über die Parameter der erzeugten elektrischen Energie.

Die Minimalsteuerung 27 ist dazu ausgelegt, auf der Basis des Zustandsgrößen-Teilsatzes Stellvorgaben zu ermitteln, die ein geordnetes Herunterfahren der Windenergieanlage 10 ermöglichen. Für diesen Zweck reicht der Zustandsgrößen-Teilsatz aus. Wenn die Windenergieanlage 10 unter der Kontrolle der Minimalsteuerung 27 betrieben wird, geht es also nicht darum, die Erzeugung elektrischer Energie fortzusetzen, sondern nur darum, die Windenergieanlage 10 in einem geregelten Vorgang herunterzufahren und die durch das Abbremsen des Rotors 13 verursachten Belastungen gering zu halten. Insbesondere sind die Belastungen gering verglichen mit den Belastungen, die beim harten Abbremsen nach Öffnen der Sicherheitskette auftreten.

Damit im Fehlerfall die Kontrolle über die Windenergieanlage 10 von der Hauptsteuerung 20 an die Minimalsteuerung 27 übergeben werden kann, umfasst die Hauptsteuerung 20 ein Überwachungsmodul 28, mit dem laufend der Eintritt eines Fehlers in der Hauptsteuerung 20 überwacht wird. Stellt das Überwachungsmodul 28 einen Fehler in der Hauptsteuerung 20 fest, so übergibt das Überwachungsmodul 28 die Kontrolle über die Windenergieanlage 10 von der Hauptsteuerung 20 an die Minimalsteuerung 27. Die Komponenten der Windenergieanlage 10 folgen dann den Stellvorgaben von der Minimalsteuerung 27 und nicht mehr den Stellvorgaben von der Hauptsteuerung 20. Die Minimalsteuerung überträgt Drehmoment-Sollwerte an den Umrichter 19, um das Drehmoment nach einem vorgegebenen Verlauf zu reduzieren. An die Rotorblätter 16 wird eine Soll-Pitchgeschwindigkeit vorgegeben, mit der die Rotorblätter 16 in Richtung Endlage verfahren werden sollen. Anschließend wird eine Pitch-Rampe durch Senden eines entsprechenden Befehls an einen Pitchcontroller aktiviert. Dadurch wird die berechnete Rampe abgefahren und die Rotorblätter 16 werden bis in eine parametrierbare Position verfahren.

Nachdem die Windenergieanlage 10 unter der Kontrolle der Minimalsteuerung 27 heruntergefahren worden ist, ist es wünschenswert, dass der normale Betrieb der Windenergieanlage 10 so schnell wie möglich wieder aufgenommen werden kann. Solange der Fehler in der Hauptsteuerung 20 noch vorliegt, ist eine Wiederaufnahme des Betriebs nicht möglich. Mit der Erfindung soll dazu beigetragen werden, dass der Fehler in der Hauptsteuerung schnell beseitigt werden kann. Gemäß Fig. 3 ist in der Hauptsteuerung 20 ein Scanner 29 vorgesehen, der laufend Informationen über den Zustand der Hauptsteuerung 20 ausliest. Die Informationen können können beispielsweise den Speicherbereich oder die Task der Hauptsteuerung 20, in denen der Fehler aufgetreten ist, die Art des Fehlers, die für die Task 26 relevanten Zustandsgrößen sowie die von der Task 26 ermittelten Stellvorgaben umfassen.

Wenn das Überwachungsmodul 28 nach einem Fehler in der Hauptsteuerung 20 die Kontrolle über die Windenergieanlage 10 an die Minimalsteuerung 27 übergibt, kann das Überwachungsmodul 28 zugleich die Informationen aus dem Scanner 29 an die Minimalsteuerung 27 übertragen. In der Minimalsteuerung 27 werden die Informationen in einem Speichermodul 30 gespeichert und bei Bedarf über eine Kommunikationsverbindung 31 an eine von der Windenergieanlage 10 entfernte Leitstelle übertragen. Dem Servicetechniker wird auf diese Weise die Suche nach dem Fehler in der Hauptsteuerung 20 erleichtert.

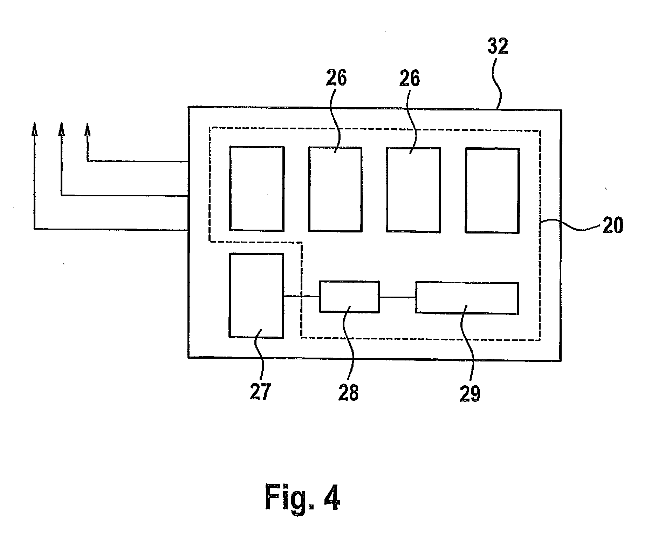

In der Ausführungsform der Fig. 4 sind die Hauptsteuerung 20 und die Minimalsteuerung 37 in einer gemeinsamen Steuereinheit 32 zusammengefasst. Die zu der Hauptsteuerung 20 gehörenden Elemente sind mit gestrichelter Linie angedeutet. Die Minimalsteuerung 27 ist eines von mehreren Segmenten 26 der Steuereinheit 32. Mit dem Überwachungsmodul 28 wird dem Segment der Minimalsteuerung 27 Priorität vor den übrigen Segmenten eingeräumt, wenn das Überwachungsmodul 28 einen Fehler in der Hauptsteuerung 20 feststellt. Die Windenergieanlage 10 steht dann unter der Kontrolle der Minimalsteuerung 27.

## Patentansprüche

1. Windenergieanlage mit einer Hauptsteuerung (20), der ein Satz von Zustandsgrößen zugeführt wird und die aus den Zustandsgrößen Stellvorgaben für den Betrieb der Windenergieanlage (10) ermittelt, wobei ferner eine Minimalsteuerung (27) und ein Überwachungsmodul (28) vorgesehen sind, wobei die Minimalsteuerung (27) aus einem Zustandsgrößen-Teilsatz eine Stellvorgabe für den Pitchwinkel und/oder die Pitchgeschwindigkeit ermittelt, und wobei das Überwachungsmodul (28) die Hauptsteuerung (20) überwacht und bei einem Fehler in der Ausführung der Hauptsteuerung (20), die Kontrolle über die Windenergieanlage (10) an die Minimalsteuerung (27) übergibt, **dadurch gekennzeichnet, dass** die Minimalsteuerung (27) dazu ausgelegt ist, Informationen über den Zustand der Hauptsteuerung (20) bei Fehlereintritt zu speichern.

2. Windenergieanlage nach Anspruch 1, **dadurch gekennzeichnet, dass** der Zustandsgrößen-Teilsatz den Pitchwinkel, die Pitchgeschwindigkeit und/oder das elektrische Drehmoment umfasst.

3. Windenergieanlage nach Anspruch 1 oder 2, **dadurch gekennzeichnet, dass** die Minimalsteuerung (27) eine Stellvorgabe für das elektrische Drehmoment und/oder eine Rotorbremse ermittelt.

4. Windenergieanlage nach einem der Ansprüche 1 bis 3, **dadurch gekennzeichnet, dass** die Minimalsteuerung (27) keine Stellvorgaben für die Parameter der erzeugten elektrischen Energie ermittelt.

5. Windenergieanlage nach einem der Ansprüche 1 bis 4, **dadurch gekennzeichnet, dass** die Minimalsteuerung (27) darauf beschränkt ist, solche Stellvorgaben zu machen, die eine Verminderung der Rotordrehzahl zur Folge haben.

6. Windenergieanlage nach einem der Ansprüche 1 bis 5, **dadurch gekennzeichnet, dass** die Minimalsteuerung (27) dazu ausgelegt ist, eine selbsttätige Wiederinbetriebnahme der Windenergieanlage zu unterbinden.

7. Minimalsteuerung nach einem der Ansprüche 1 bis 6, **dadurch gekennzeichnet, dass** bei einem Fehler in der Minimalsteuerung (27) die Sicherheitskette geöffnet wird.

8. Windenergieanlage nach einem der Ansprüche 1 bis 7, **dadurch gekennzeichnet, dass** die Hauptsteuerung und die Minimalsteuerung in einer Steuerungseinheit (32) zusammengefasst sind.

9. Verfahren zum Betreiben einer Windenergieanlage, wobei die Windenergieanlage (10) eine Hauptsteuerung (20) umfasst, der eine Vielzahl von Zustandsgrößen zugeführt wird und die aus den Zustandsgrößen Stellvorgaben für den Betrieb der Windenergieanlage (10) ermittelt, mit folgenden Schritten:
a. Feststellen eines Fehlers in der Ausführung der Hauptsteuerung (20);
b. Übergeben der Kontrolle über die Windenergieanlage (10) an eine Minimalsteuerung (27), die aus einem Zustandsgrößen-Teilsatz eine Stellvorgabe für den Pitchwinkel und/oder die Pitchgeschwindigkeit ermittelt;
c. Abbremsen der Windenergieanlage (10) bis zum Stillstand gemäß den Stellvorgaben der Minimalsteuerung (27);
**dadurch gekennzeichnet,**
**dass** eine Information über den in der Hauptsteuerung (20) aufgetretenen Fehler an die Minimalsteuerung (27) übermittelt wird.

10. Verfahren nach Anspruch 9, **dadurch gekennzeichnet, dass** die Fehlerinformation an eine von der Windenergieanlage (10) entfernte Leitstelle übermittelt wird und/oder in der Minimalsteuerung (27) gespeichert wird.

## Claims

1. A wind power plant having a main controller (20), to which a set of state variables is fed and which determines preset actuation values for the operation of the wind power plant (10) from the state variables, wherein in addition a minimal controller (27) and a monitoring module (28) are provided, wherein the minimal controller (27) determines a preset actuation value for the pitch angle and/or the pitch speed from a partial set of state variables, and wherein the monitoring module (28) monitors the main controller (20) and in the event of a fault in the execution by the main controller (20) said monitoring module (28) transfers the control of the wind power plant (10) to the minimal controller (27), **characterized in that** the minimal controller (27) is configured to store information about the state of the main controller (20) in the event of a fault occurring.

2. The wind power plant as claimed in claim 1, **characterized in that** the partial set of state variables comprises the pitch angle, the pitch speed and/or the electrical torque.

3. The wind power plant as claimed in claim 1 or 2, **characterized in that** the minimal controller (27) determines a preset actuation value for the electrical torque and/or a rotor brake.

4. The wind power plant as claimed in one of claims 1 to 3, **characterized in that** the minimal controller (27) does not determine any preset actuation values for the parameters of the generated electrical energy.

5. The wind power plant as claimed in one of claims 1 to 4, **characterized in that** the minimal controller (27) is restricted to defining such preset actuation values which result in a reduction in the rotor speed.

6. The wind power plant as claimed in one of claims 1 to 5, **characterized in that** the minimal controller (27) is configured to prevent automatic re-activation of the wind power plant.

7. The minimal controller as claimed in one of claims 1 to 6, **characterized in that** in the event of a fault in the minimal controller (27) the safety chain is opened.

8. The wind power plant as claimed in one of claims 1 to 7, **characterized in that** the main controller and the minimal controller are combined in one control unit (32).

9. A method for operating a wind power plant, wherein the wind power plant (10) comprises a main controller (20) to which a plurality of state variables are fed and which determines preset actuation values for the operation of the wind power plant (10) from the state variables, having the following steps:
a. determination of a fault in the execution of the main controller (20);
b. transfer of the control of the wind power plant (10) to a minimal controller (27) which determines a preset actuation value for the pitch angle and/or the pitch speed from a partial set of state variables; and
c. braking of the wind power plant (10) as far as the stationary state according to the preset actuation values of the minimal controller (27).
**characterized in that** information about the fault which has occurred in the main controller (20) is transmitted to the minimal controller (27).

10. The method as claimed in claim 9, **characterized in that** the fault information is transmitted to a control center which is at a distance from the wind power plant (10) and/or is stored in the minimal controller (27).

## Revendications

1. Installation d'énergie éolienne comprenant une commande principale (20) à laquelle un ensemble de valeurs d'état sont fournies et qui détermine des consignes de réglage pour le fonctionnement de l'installation d'énergie éolienne (10) à partir de ces valeurs d'état, étant entendu qu'il est également prévu une commande minimale (27) et un module de surveillance (28), étant entendu que la commande minimale (27) détermine une consigne de réglage pour l'angle de pas et/ou la vitesse de pas à partir d'un ensemble partiel de valeurs d'état et étant entendu que le module de surveillance (28) surveille la commande principale (20) et, en cas de défaillance dans l'exécution de la commande principale (20), transfère le contrôle de l'installation d'énergie éolienne (10) à la commande minimale (27), **caractérisée en ce que** la commande minimale (27) est conçue pour enregistrer des informations sur l'état de la commande principale (20) si une défaillance survient.

2. Installation d'énergie éolienne selon la revendication 1, **caractérisée en ce que** l'ensemble partiel de valeurs d'état comprend l'angle de pas, la vitesse de pas et/ou le couple électrique.

3. Installation d'énergie éolienne selon la revendication 1 ou 2, **caractérisée en ce que** la commande minimale (27) détermine une consigne de réglage pour le couple électrique et/ou un frein de rotor.

4. Installation d'énergie éolienne selon l'une des revendications 1 à 3, **caractérisée en ce que** la commande minimale (27) ne détermine aucune consigne de réglage pour les paramètres de l'énergie électrique produite.

5. Installation d'énergie éolienne selon l'une des revendications 1 à 4, **caractérisée en ce que** la commande minimale (27) est limitée à réaliser les consignes de réglage qui ont pour conséquence une diminution de la vitesse de rotation du rotor.

6. Installation d'énergie éolienne selon l'une des revendications 1 à 5, **caractérisée en ce que** la commande minimale (27) est conçue de façon à empêcher une remise en service spontanée de l'installation d'énergie éolienne.

7. Commande minimale selon l'une des revendications 1 à 6, **caractérisée en ce qu'**en cas de défaillance dans la commande minimale (27), la chaîne de sécurité est ouverte.

8. Installation d'énergie éolienne selon l'une des revendications 1 à 7, **caractérisée en ce que** la commande principale et la commande minimale sont réunies dans une unité de commande (32).

9. Procédé d'exploitation d'une installation d'énergie éolienne, étant entendu que l'installation d'énergie éolienne (10) comprend une commande principale (20) à laquelle une pluralité de valeurs d'état sont fournies et qui détermine des consignes de réglage pour le fonctionnement de l'installation d'énergie éolienne (10) à partir de ces valeurs d'état, comprenant les étapes suivantes :
a. détection d'une défaillance dans l'exécution de la commande principale (20) ;
b. transfert du contrôle sur l'installation d'énergie éolienne (10) à une commande minimale (27) qui détermine une consigne de réglage pour l'angle de pas et/ou la vitesse de pas à partir d'un ensemble partiel de valeurs d'état ;
c. freinage de l'installation d'énergie éolienne (10) jusqu'à l'arrêt conformément aux consignes de réglage de la commande minimale (27) ;
**caractérisé en ce qu'**une information sur la défaillance survenue dans la commande principale (20) est transmise à la commande minimale (27).

10. Procédé selon la revendication 9, **caractérisé en ce que** l'information sur la défaillance est transmise à un poste de commande à distance de l'installation d'énergie éolienne (10) et/ou enregistrée dans la commande minimale (27).
